# EUROPÄISCHE PATENTANMELDUNG

(11) **EP 2 339 718 A2**
(43) Veröffentlichungstag der Anmeldung: **29.06.2011**
(21) Anmeldenummer: 10015712.2
(22) Anmeldetag: 16.12.2010
(51) Int. Cl.: H02K 1/14, H02K 1/27, H02K 33/02

(54) **Drehmagnet**

(30) Priorität: 22.12.2009 DE 102009060407
(71) Anmelder: SVM Schultz Verwaltungs-GmbH & Co. KG, 87700 Memmingen (DE)
(72) Erfinder: Willburger, Winfried, 88457 Kirchdorf (DE); Kreuzer, Daniel, 89293 Kellmünz (DE)
(74) Vertreter: Schulz, Manfred

(57) **Zusammenfassung**

Die Erfindung betrifft einen Drehmagneten, bestehend aus einem Stator und einen um eine Drehachse drehbaren Rotor. Der Rotor weist eine Rotorwelle auf, auf welcher eine Rotorscheibe angeordnet ist. Die Rotorscheibe ist in Umfangsrichtung gesehen alternierend magnetisch polarisiert. Der Stator trägt mindestens eine Spule. Auf der Spule sind Wicklungen von elektrischen Strom leitendem Draht vorgesehen. Zur Magnetflussführung des durch die Spule erzeugten Magnetfeldes ist eine aus mehreren Polteilflächen bestehende Polfläche vorgesehen.

## Beschreibung

Die Erfindung betrifft einen Drehmagnet, bestehend aus einem Stator und einem um eine Drehachse drehbaren Rotor, wobei der Rotor eine Rotorwelle aufweist, auf welcher eine Rotorscheibe angeordnet ist und die Rotorscheibe in Umfangsrichtung gesehen, alternierend, magnetisch polarisiert ist und der Stator mindestens eine, Wicklungen von elektrischem Strom leitenden Draht tragende Spule aufnimmt und zwischen der Spule und der Rotorscheibe eine bevorzugt rechtwinklig zur Drehachse angeordnete Polfläche vorgesehen ist.

Die gattungsgemäßen Drehmagnete sind auf dem elektromagnetischen Prinzip beruhende Antriebe, bei welchen anstelle einer Längs- oder Longitudinalbewegung eine Drehbewegung resultiert. Gattungsgemäße Drehmagnete sind zum Beispiel als Drehproportionalmagnete bekannt, die aufgrund des Stromflusses durch die Wicklungen eine dem Stromfluss proportionale Drehbewegung ausführen.

Im Stand der Technik ist es hierzu bekannt, nicht eine bezüglich der Drehachse rotationssymmetrische Magnetfeldanordnung zu realisieren, sondern eine hierzu möglichst asymmetrische. Dieses heterogen asymmetrische Magnetfeld, wirkt dann mit der magnetisierten Rotorscheibe zusammen. Dieses Magnetfeld wird von elektrischem Strom durchflossenen Spulen gebildet. Die unterschiedliche Anordnung von Nord- und Südpolen auf der Rotorscheibe (diese ist alternierend, magnetisch polarisiert) versucht dann, sich im erzeugten Magnetfeld des Elektromagneten entsprechend zu positionieren, also zu bewegen beziehungsweise zu drehen.

Im Stand der Technik ist es hierbei bekannt, zwei oder mehrere verhältnismäßig komplexe Spulenkörper im Stator anzuordnen, um die gewünschten Magnetfeldlinienflussverteilung zu erreichen.

Erreicht wird dies durch eine Anordnung von mehreren, verhältnismäßig kompliziert zu wickelnden Spulen um die Drehachse herum, das heißt, der jeweilige Spulenschwerpunkt liegt nicht auf der Drehachse.

Aus dieser Konstruktion resultieren verhältnismäßig teuer zu erstellende Drehmagnete, da die einzelnen Spulen nicht auf zylinderförmigen Spulenkörpern aufwickelbar sind, sondern hierfür Spezialkörper notwendig sind, die gegebenenfalls auch unter Verwendung von speziellen Herstellverfahren, die entsprechend aufwändig sind, mit den Drahtwicklungen zu belegen sind. Somit ist jede einzelne Spule verhältnismäßig aufwändig herzustellen und es ist auch eine relativ große Anzahl von Spulen bereitzustellen, die von der Drehachse entfernt angeordnet sind, um eine entsprechende Magnetfeldlinienverteilung zu ergeben. Neben hohen Herstellungskosten besitzen die Vorschläge nach dem Stand der Technik auch ein realtiv großes Bauvolumen.

Es ist Aufgabe der vorliegenden Erfindung den Stand der Technik derart zu verbessern, dass zumindest einer der vorgenannten Nachteile überwunden wird.

Zur Lösung dieser Aufgabe geht die Erfindung aus von einem Drehmagnet wie eingangs beschrieben und schlägt vor, dass die Polfläche zumindest aus zwei der Magnetflussführung des von der durch Strombeaufschlagung der Wicklung der Spule erzeugten Magnetfeldes dienenden Polteilflächen besteht, wodurch an der Polfläche eine, bezogen auf die Drehachse im Umfangsrichtung gesehene, alternierende, magnetische Polarisierung besteht. Des Weiteren schlägt die Erfindung vor, dass die Wicklungen der Spule die Drehachse umschließen.

Der Vorschlag der Erfindung erreicht, dass Standardspulen bei erfindungsgemäßen Drehantrieben verwendbar sind. Die Verwendung von Standardspulen ist in doppelter Hinsicht günstig, da zum Einen die Wickeltechnik auf zylinderförmige Spulenkörper wohl bekannt ist und auch keine sonstigen speziellen Herstellungsverfahren notwendig sind, die Herstellung ist also günstig. Im Gegensatz zum Stand der Technik reicht es bereits aus, wenn eine Spule (ohne die Erfindung hierauf beschränken zu wollen) eingesetzt wird, das heißt, der erfindungsgemäße Drehmagnet benötigt eine geringere Anzahl von an sich günstiger herzustellenden Spulen. Die Anordnung der Spule ist dabei so, dass die Wicklungen die Drehachse umschließen, also die Drehachse innerhalb der Spule verläuft. Hieraus resultiert überraschenderweise ein sehr platzsparender Aufbau, da auf die einzelnen speziellen Spulen im Umfangsbereich der Drehachse nach dem Stand der Technik verzichtet werden kann. Mit Hilfe der Aufteilung der Polfläche in mindestens zwei Polteilflächen, wird die gewünschte Führung des magnetischen Flusses beziehungsweise der magnetischen Feldlinien erreicht. Dabei ist die Anordnung der einzelnen Polteilflächen so gewählt, dass in Umfangsrichtung bezüglich der Drehachse gesehen, eine alternierende, magnetische Polarisierung resultiert, wenn ein elektrischer Strom durch den Draht der Wicklungen der Spule fließt und das Magnetfeld erzeugt.

Die Rotorscheibe ist dabei entsprechend magnetisch beaufschlagt, zum Beispiel besteht die Rotorscheibe selber aus einem permanentmagnetischen Werkstoff oder trägt eine entsprechende Beschichtung mit entsprechend alternierender Polarisierung oder aber auf der Rotorscheibe ist ein zusätzlicher Kranz oder Ring von Permanentmagneten in der gewünschten Form angeordnet, wobei die Rotorscheibe dann zum Beispiel aus einem ferromagnetischen Material besteht. Der erfindungsgemäße Vorschlag umfasst alle diese Lösungen.

In einer bevorzugten Ausgestaltung der Erfindung, die selbstverständlich auch im Zusammenhang mit sämtlichen, einzelnen oder Kombinationen der weiteren Ausführungsformen realisierbar ist, ist vorgesehen, dass zwischen den Polteilflächen ein Polspalt vorgesehen ist, der sich in radialer Richtung bezogen auf die Drehachse erstreckt. Durch eine entsprechende Gestaltung der Polteilfläche, die von einem Polspalt randseitig begrenzt wird, ist es möglich, die rotations- oder punktsymmetrische Magnetfeldlinienverteilung, die normalerweise bei einer Strom durchflossenen Spule resultiert, so zu steuern, dass ein von der Rotations- oder Punktsymmetrie abweichender Magnetfeldlinienverlauf resultiert. Dabei nutzt die Erfindung die Eigenschaft aus, dass durch die entsprechende Anordnung von die Magnetfeldlinien führenden weichmagnetischen Materiales (zum Beispiel entsprechenden Eisenlegierung und ähnlichem) eine heterogene Verteilung der Magnetfeldlinien erfolgt. Dabei schließt die Erfindung natürlich nicht aus, dass zum Beispiel aus Herstellungsgründen bestehende Verbindungsbrücken zwischen beiden Polteilflächen den Polspalt überbrücken, durch eine solche (metallische oder magnetisch führende) Verbindungen wird allenfalls die Effizienz verschlechtert nicht aber der erfindungsgemäße Effekt verfehlt.

Erfindungsgemäß wird vorgeschlagen, dass der Polspalt, der sich zwischen den beiden Polteilfächen ergibt, z.B. unter einem magnetisch weniger wirksamen oder unwirksamen Material befüllt ist oder der Polspalt als Polluftspalt ausgebildet ist.

Für die Erfindung ist es gleichwertig, ob der sich ergebende Polspalt befüllt oder offen ist. Das eingesetzte Verfüllmaterial, z.B. ein Polymer oder ähnliches, dient dazu, die Polteilflächen dicht miteinander zu verbinden, um einen magnetischen Feldlinienfluß möglichst zu unterdrücken, hierfür also möglichst isolierend zu sein.

Die Anordnung der unterschiedlichen Polteilflächen ist dabei so realisiert, dass in Umfangsrichtung (bezogen auf die Drehachse) gesehen eine alternierende, magnetische Polarisierung besteht. Geschickterweise wird dabei zum Beispiel in einer erfindungsgemäßen Variante, die selbstverständlich in Verbindung mit sämtlichen vor- und nachbeschriebenen Ausführungsformen sowie Kombinationen dieser Ausführungsformen realisiert werden kann, eine Anordnung gewählt, bei welcher eine erste äußere Polteilfläche eine zweite, innere Polteilfläche umschließt. Dabei ist die erste, äußere Polteilfläche zum Beispiel Teil eines größeren Bauteiles, in welchem dann in geeigneter Weise die zweite, innere Polteilfläche eingesetzt wird, wobei geschickterweise zwischen diesen beiden Polteilflächen ein Polspalt verbleibt. Bevorzugt wird eine achssymmetrische Ausgestaltung der Polteilfläche eingesetzt. So sind zumindest eine oder wenige Symetrieachsen bei der Gestaltung der Polteilfläche vorgesehen, um ein entsprechend gleichartiges Verhalten des Drehmagneten (unabhängig von seiner jeweiligen Lage) zu erreichen.

Die Polfläche ist erfindungsgemäß in mindestens zwei Polteilflächen aufgeteilt. Diese beiden Polteilflächen sind aber zu einander koplanar, das heißt, Punkte sowohl der ersten wie auch der zweiten beziehungsweise aller Polteilflächen liegen auf einer gemeinsamen Ebene. Als Polteilfläche wird hierbei insbesondere die der Rotorscheibe zugewandte Oberfläche angesehen. Aufgrund der rechtwinkligen Anordung der Polfläche und somit auch der Polteilflächen bezüglich der Drehachse, folgt ein unabhängig von der Stellung des Rotors gleich großer Luftspalt zwischen der Rotorscheibe und der Polfläche.

In einer bevorzugten Ausgestaltung der Erfindung, die selbstverständlich in Verbindung mit sämtlichen vor- und nachstehend beschriebenen Ausführungsformen der Erfindung sowie Kombinationen davon realisiert werden kann, ist die zweite, insbesondere innere Polteilfläche in Draufsicht gesehen, längserstreckend ausgebildet. Sie ist rechteckartig realisiert, wobei an den Längsseiten im Endbereich entsprechende (radial verlaufende) Aufweitungen vorgesehen sein können. Das Verhältnis der Länge zur Breite dieser Polteilfläche ist dabei ca. 2:1, es kann erfindungsgemäß in einem Intervall von 1,5:1 bis 4:1 liegen. Es ist klar, dass durch die Ausgestaltung der inneren wie aber auch der äußeren Polteilfläche die magnetische Eigenschaft des Drehmagneten einstellbar ist. Dabei umfasst die Erfindung Varianten der Polteilfläche, die sowohl eine zweiteilige Symmetrie (nur bezüglich zwei Symmetrieachsen symmetrisch) aufweist, wie auch Lösungen die eine vier-, sechs- oder achtteilige (oder auch höherteilige) Symmetrie besitzen. Die hieraus resultierende entsprechend komplexeren Polteilflächen gleichen sich dann gegebenenfalls mehr einer runden Außenkontur an. Bei einer zweiteiligen Symmetrie ist die Polteilfläche zum Beispiel längs seiner Längsachse und der dazu rechtwinkligen Querachse symmetrsich ausgestaltet.

Geschickterweise sind in verschiedenen Polteilflächen unterschiedliche Magnetpole zugeordnet, die in geeigneter Weise mit den alternierend, magnetisch polarisierten Bereichen der Rotorscheibe zusammenwirken.

Der Stator ist in einer erfindungsgemäßen Variante, die selbstverständlich mit sämtlichen vor- und nachstehend beschriebenen Ausführungsformen der Erfindung sowie Kombinationen davon realisiert werden kann, so ausgestaltet, dass er die Spule umgibt beziehungsweise umschließt und als Gehäuse dient. Da die Spule rotationssymetrisch, insbesondere zylinderförmig ausgestaltet ist, weist auch der Stator eine prizipell zylinderförmige oder topfartige Gestaltung auf. Die Anordnung ist dabei gegebenenfalls so gewählt, dass der Stator an der Außenseite und/oder Innenseite der Spule für Führungszwecke aufliegt. Insbesondere ist in einer erfindungsgemäßen Variante vorgesehen, dass der Stator einen die Spule durchdringenden und die zweite innere Polteilfläche tragende, insbesondere dornartigen Mittelpol aufweist. Die Anordnung ist dabei so gewählt, dass der Schwerpunkt der zweiten, inneren Polteilfläche auf der Drehachse zum Liegen kommt. Hieraus resultiert eine möglichst exakte, zentrische Anordnung der inneren, zweiten Polteilfläche.

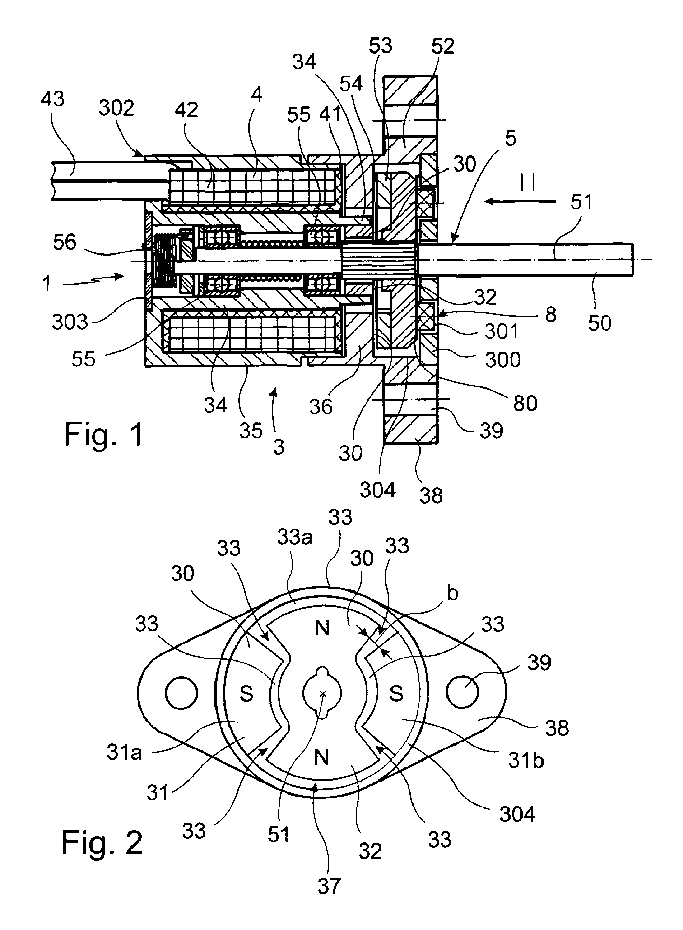

Erfindungsgemäß ist vorgesehen, dass der Stator der Magnetflussführung des von der durch Strombeaufschlagung der Wicklung der Spule erzeugten Magnetfeldes dient und bevorzugt aus weichmagnetischem Eisen gefertigt ist. Anstelle des weichmagnetischen Eisens können erfindungsgemäß alle anderen Materialien eingesetzt werden, die einer Führung des magnetischen Flusses optimal dienen. Wie sich insbesondere aus der Zeichnung (insbesondere Fig. 1) ergibt, ist der Stator topfartig ausgebildet mit einem zentrisch oder koaxial angeordneten Mittelpol. Gerade aber der äußere Bereich, der die Spule umschließt, wird geschickterweise jetzt zur Führung des Magnetfeldes eingesetzt, wodurch die Effizienz der gesamten Anordnung erheblich steigt. Da eine solche Anordnung im Stand der Technik unbekannt ist, wird durch diese Maßnahme ein überraschender Vorteil erreicht, bei der dem Stator nun nicht nur die feststehende Aufgabe einer drehenden Anordnung zugeordnet ist, sondern dieser zusätzlich auch noch die Aufgabe einer Führung des Magnetfeldes sowie auch eine Gehäuseaufgabe übernimmt.

In einer bevorzugten Variante der Erfindung, die selbstverständlich mit sämtlichen vor- und nachstehend beschriebenen Ausführungsformen der Erfindung sowie Kombinationen davon realisiert werden kann, ist vorgesehen, dass der Stator mehrteilig ausgebildet ist und zumindest ein Mantelteil die Spule aufnimmt und ein Deckelteil am Mantelteil anschließt und dieses verschließt. Durch den mehrteiligen Aufbau ist es möglich, in einem ersten Teil, dem Mantelteil, die Spule einzusetzen und diesen durch einen zweiten Teil, dem Deckelteil, zu verschließen. Zum Beispiel werden die beiden Teile miteinander verpresst oder verstemmt und so für eine optimale magnetische Flussführung, miteinander verbunden. Neben diesen mechanischen Verbindungsverfahren sind natürlich auch andere Verbindungsverfahren erfindungsgemäß einsetzbar, hierzu zählen zum Beispiel das Verbinden mit Hilfe einer Schraubverbindung oder ein Verschweißen, Verkleben beziehungsweise Verlöten. Neben der hier beschriebenen zweiteiligen Ausgestaltung des Stators ist es natürlich auch möglich, den Stator aus noch mehreren Bauteilen, zum Beispiel drei oder mehr Bauteilen zu realisieren. Eine mehrteilige Ausgestaltung kann insbesondere fertigungstechnische Gründe und Vorzüge besitzen.

Geschickterweise ist die Anordnung so gewählt, dass der Stator eine Polteilfläche bildet, wobei diese (erste, äußere) Polteilfläche insbesondere in oder am Deckelteil angeordnet ist. Dabei wird erfindungsgemäß vorgesehen, dass der Stator, insbesondere der Deckelteil, im Bereich der ersten Polteilfläche eine Ausnehmung zur Aufnahme der zweiten Polteilfläche besitzt und die Kontur der Ausnehmung der Kontur der zweiten Polteilfläche entspricht, wobei sich zwischen beiden Polteilflächen zumindest teilweise ein Polluftspalt erstreckt.

Von der Erfindung in allen Ausführungsformen und Kombinationen davon ist auch umfasst, dass der Stator auch mehrere Polteilflächen in geeigneter Weise aufnimmt. Die Erfindung erstreckt sich insbesondere auch auf Varianten, die aus drei, vier oder noch mehr einzelnen Polteilflächen bestehen. Einstückig kann dabei natürlich eine Polteilfläche mit dem Stator beziehungsweise einem Teil des Stators (zum Beispiel dem Deckelteil) ausgebildet sein.

Es ist günstig, wenn für Befestigungszwecke am Deckelteil mindestens eine Befestigungsöffnung vorgesehen ist. Die Befestigungsöffnung ist zum Beispiel in einem flanschartigem Vorsprung angeordnet.

In einer bevorzugten Ausgestaltung der Erfindung, die selbstverständlich mit sämtlichen vor- und nachstehend beschriebenen Ausführungsformen der Erfindung sowie Kombinationen davon realisiert werden kann, ist vorgesehen, dass die Rotorscheibe auf ihrer der Spule zugewandten Seite zumindest einen Ring von Permanentmagneten trägt. Dieser Ring von Permanentmagneten besteht dabei aus einer größeren Anzahl von bezüglich ihrer Abmessung als auch ihrer verbleibenden Magnetisierung gleichartigen Permanentmagneten. Die einzelnen Permanentmagnete werden zu einem Ring (mit konstantem Radius), dessen Mittelpunkt auf der Drehachse liegt, angeordnet, wodurch sich bevorzugt eine Anordnung einzelner Ringsektoren mit gleicher Länge ergibt. Besitzen die einzelnen Permanentmagnete auch eine gleiche Magnetisierung, so ist auch der Verlauf der Magnetfeldlinien im Bereich der einzelnen Sektoren mindestens annähernd gleich. Die Anordnung ist dabei so gewählt, dass sich eine alternierende Polarisierung ergibt, also in Umfangsrichtung (bezogen auf die Drehachse der Rotorscheibe) eine abwechselnde Magnetpolanordnung ergibt.

In einer bevorzugten Ausgestaltung der Erfindung, die selbstverständlich mit sämtlichen vor- und nachstehend beschriebenen Ausführungsformen der Erfindung sowie Kombinationen davon realisiert werden kann, entspricht die Länge der inneren, zweiten Polteilfläche im wesentlichen dem Radius des Ringes von Permanentmagneten. Es wurde bereits beschrieben, dass durch die Anordnung der Polteilflächen, insbesondere der inneren Polteilfläche, eine heterogene Verteilung der ansonsten homogen, punkt- oder rotationssymmetrischen Magnetfeldlinienverteilung einer Strom durchflossenen Spule resultiert. In dem erfindungsgemäßen Vorschlag, die Länge der zweiten (inneren) Polteilfläche im wesentlichen dem Radius des Ringes von Permanentmagneten anzunähern, erfolgt eine Konzentration des aus der Spule austretenden Magnetfeldlinien im radialen Bereich der Permanentmagnete und daher eine entsprechende Kraftentfaltung. Dabei ist es günstig, dass die (zweite) Polteilfläche bevorzugt längserstreckend, rechteckartig ausgebildet ist. Unter einer rechteckartigen Ausgestaltung wird insbesondere eine Kontur verstanden, wie sie insbesondere in Fig. 2 gezeigt ist.

Für ein möglichst homogenes Verhalten des Drehmagneten (unabhängig von seiner konkreten Stellung der Rotorscheibe) ist es günstig, wenn der Luftspalt in axialer Richtung (bezogen auf die Drehachse) zwischen der Polfläche und der Rotorscheibe entlang der Polfläche überall gleich ist, wodurch auch eine parallele Anordnung der Polfläche (und der damit koplanar angeordneten einzelnen Polteilflächen) zu der Rotorscheibe beziehungsweise dem Ring von Permanentmagneten resultiert.

Durch eine geschickte Dimensionierung des Luftspaltes zwischen der Polfläche und der Rotorscheibe und des Polspaltes zwischen den einzelnen Polteilflächen, wird das Verhalten des Drehmagnetes charakterisiert beziehungsweise optimiert. So wird erfindungsgemäß vorgeschlagen, dass der Luftspalt in axialer Richtung, bezogen auf die Drehachse, zwischen der Polfläche und der Rotorscheibe geringer ist als der Polspalt. Durch eine solche Ausgestaltung "zwingt" man die an der Polteilfläche austretenden Magnetfeldlinien primär in das Material der Rotorscheibe einzudringen und über diesen den magnetischen Schluss zur anderen Polteilfläche zu suchen. Bei einer geschickten Dimensionierung der Abstände wie beschrieben, wird dieses Verhalten gesteuert.

Dabei ist insbesondere gefunden worden, dass es noch günstiger ist, die Summen der Breite des Luftspaltes und der Dicke des Ringes von Permanentmagneten geringer zu wählen, als die Größe des Polspaltes.

Ein wesentlicher Vorzug der Erfindung und sämtlicher möglicher Ausführungsformen davon liegt insbesondere darin, dass die gesamte Polfläche koplanar ist, das heißt, auf der Polfläche keine der Rotorscheibe zugewandten Erhebungen oder erhabenen Sektoren und so weiter vorgesehen sind. Dadurch wird eine in axialer Richtung optimierte kurze Bauform realisiert.

Insgesamt ist der Drehmagnet bevorzugt asymmetrisch aufgebaut, das bedeutet, bezogen auf die Rotorscheibe schließt sich der magnetische Teil, das heißt, die Spule nur auf einer Seite an, hieraus resultiert eine einseitige Ausgestaltung der Rotorscheibe.

Bevorzugt schließt sich auf der der Spule abgewandten Seite an der Rotorscheibe ein, insbesondere magnetisch gering wirksame oder magnetisch unwirksame Abdeckscheibe an. Als Material für die Abdeckscheibe bietet sich hierbei zum Beispiel Edelstahl (V2A) oder Aluminium oder auch ein Kunststoff oder Verbundwerkstoff an. Eine geringe magnetische Wirksamkeit ist für den erfinderischen Effekt unschädlich, weil die hieraus resultierenden Verluststreuungen den erfindungsgemäßen Effekt nicht verhindern.

Geschickterweise ist eine Drehwinkelbegrenzung an der Rotorscheibe oder an der Rotorwelle vorgesehen. Diese ist mit entsprechenden Dämpfern ausgestattet. Günstigerweise ist mindestens ein Drehlager des Rotors im Stator vorgesehen, bevorzugt sind hierzu mehrere Drehlager realisiert.

Die Erfindung und sämtliche Ausführungsformen sowie Kombinationen davon umfassen Lösungen, bei welchen nicht nur eine, sondern auch mehrere, bevorzugt hintereinander (in axialer Richtung) angeordnete Spulen im Stator vorgesehen sind. So ist es beispielsweise möglich in einer Art Baukastenprinzip mit wenigen Bauteilen eine größere Reihe unterschiedlicher Drehmagnete bezüglich ihrer Kraftentfaltung und so weiter zu realisieren.

In einer bevorzugten Ausgestaltung der Erfindung, die selbstverständlich mit sämtlichen vor- und nachstehend beschriebenen Ausführungsformen der Erfindung sowie Kombinationen davon realisiert werden kann, ist eine bezüglich der Drehachse koaxiale Anordnung der Spule vorgesehen. Die Spule, die bevorzugt als zylinderförmige Spule (mit einem kreisrunden Querschnitt) ausgebildet ist, ist bezüglich ihrer Längs- oder Mittelachse koaxial zur Drehachse orientiert, das heißt, die Längsachse der Spule führt zusammen mit der Drehachse des Rotors. Auch der Einsatz eines Spulenkörpers oder einer Spule, die eine elliptische Grundfläche oder einen Querschnitt aufweist, ist erfindungsgemäß vorgesehen. Der Vorteil einer solchen Ausgestaltung liegt darin, dass hier bereits tendenziell eine heterogene Magnetfeldverteilung im Inneren der Spule besteht, ein elliptischer Spulenkörper in herkömmlicherweise mit den Wicklungen belegbar ist und auch hier eine Anordnung möglich ist, bei welcher die Drehachse innerhalb des elliptischen Spulenkörpers verläuft also sehr platzsparend verbaubar ist.

Es ist klar, dass die Erfindung sowie deren bevorzugte Ausführungsformen und deren Kombinationen somit nicht nur auf verhältnismäßig einfache, regelmäßige Spulenkörper beschränkt ist, sondern auch der erfinderische Effekt erreicht wird, wenn zum Beispiel Spulen oder Spulenkörper eingesetzt werden, die so realisiert sind, dass die darauf aufgebrachten Wicklungen hernach die Drehachse umschließen und zum Beispiel immer noch in einfacher Weise herstellbar sind, auch wenn ihre Spulenkörper selber verhältnismäßig komplex (mehreckig, polygonal oder ähnliches) sind.

In einer bevorzugten Ausgestaltung der Erfindung, die selbstverständlich mit sämtlichen vor- und nachstehend beschriebenen Ausführungsformen der Erfindung sowie Kombinationen davon realisiert werden kann, ist des Weiteren vorgesehen, dass die Rotorwelle mindestens zwei Rotorscheiben trägt und die Spule zwischen den beiden Rotorscheiben vorgesehen ist. Bei dieser erfindungsgemäßen Variante wird das Konzept für die Magnetflussverteilung beidseitig an der Spule realisiert. Das bedeutet, auch die Polfläche, die der zweiten Rotorscheibe zugewandt ist, ist aus zumindest zwei der Magnetflussführung des von der durch Strombeaufschlagung der Wicklung der Spule erfolgten Magnetfeldes dienen Polteilflächen gebildet. Auch diese Polfläche kann erfindungsgemäß alle Merkmale besitzen, wie dies für die erste Polfläche beschrieben wurde. Die hieraus resultierende Magnetisierung ist ebenfalls, bezüglich der Drehachse in Umfangsrichtung gesehen, alternierend. Somit ist natürlich auch eine kaskadenartige oder abwechselnde Anordnung von mehreren Spulen und mehreren Rotorscheiben nach der Erfindung möglich.

In einer anderen erfindungsgemäßen Variante, die auch mit sämtlichen vorbeschriebenen Ausführungsformen kombinierbar ist, ist vorgesehen, dass zumindest eine Polteilfläche von dem Spulenkörper der Spule gehalten ist. Diese erfindungsgemäße Verbesserung betrifft sowohl die innere Polteilfläche wie auch die äußere Polteilfläche. Das bedeutet, dass die Polteilflächen nicht zwingend entweder vom Mittelpol gehalten oder Teil des Stators sein müssen, bei einer anderen konstruktiven Auslegung ist es durchaus geschickt den sowieso für die Bildung der Spule vorgesehenen Spulenkörper auch als Befestigungspunkt für die Polteilflächen einzusetzen.

In der Zeichnung ist die Erfindung insbesondere in einem Ausführungsbeispiel schematisch dargestellt. Es zeigen:
- Fig. 1:: einen Schnitt durch einen erfindungsgemäßen Drehmagneten;
- Fig. 2:: eine Ansicht auf den erfindungsgemäßen Drehmagneten, entsprechend dem Pfeil II in Fig. 1 mit demontiertem Rotor;
- Fig. 3a, 3b:: in einer Draufsicht (ähnlich wie in Fig. 2), den erfindungsgemäßen Drehmagneten in zwei verschiedenen Stellungen des Rotors.

In den Figuren sind gleiche oder einander entsprechende Elemente jeweils mit den gleichen Bezugszeichen bezeichnet und werden daher, sofern nicht zweckmäßig, nicht erneut beschrieben.

Der erfindungsgemäße Drehmagnet 1 ist in Fig. 1 in der Schnittdarstellung schematisch dargestellt. Der Drehmagnet 1 besteht im wesentlicchen aus einem Stator 3 und einem Rotor 5. Der Stator 3 nimmt die Spule 4 auf, der Rotor 5 dreht sich um die Drehachse 51.

In dem hier gezeigten Ausführungsbeispiel besteht der Stator 3 aus zwei Teilen, nämlich dem Mantelteil 35 und dem Deckelteil 36. Der Mantelteil 35 ist topfartig ausgestaltet und nimmt die Spule 4 auf. Gleichzeitig wirkt insbesondere das Mantelteil 35 als Gehäuse und schließt den Drehmagneten 1 ab.

Die äußere Form des Mantelteils 35 ist dabei topfartig, wobei konzentrisch ein Mittelpol 34 dornartig vorgesehen ist, auf welchen der Spulenkörper 41 der Spule 4 aufsetzbar ist. Auf der Innenseite des Mittelpols 34 sind bezüglich der Drehachse 51 voneinander etwas beabstandet zwei Drehlager 55 vorgesehen, welche die Rotorwelle 50 des Rotors 5 im Stator radial abstützen. In axialer Richtung gesehen steht der Mittelpol 34 in Richtung des Deckelteiles 36 über das Ende der Spule 4 hervor. Er bildet so eine dornartige Aufsetzmöglichkeit, der Mittelpol 34 ist koaxial zur Drehachse 51 angeordnet.

Die Spule 4 ist gebildet aus einem im wesentlichen zylinderförmigen Spulenkörper 41, der die Wicklungen 42 trägt. Die Wicklungen 42 bestehen aus einem stromleitenden Draht. Die Wicklungen sitzen auf dem Spulenkörper, der Spulenkörper und somit auch die Wicklungen 42 sind in dem Stator 3 so angeordnet, dass sie die Drehachse 51 umschließen.

Auf der dem Deckelteil 36 abgewandten Seite des Stators 3, im Bodenbereich 302, ist ein Durchbruch für das Anschlußkabel 43 der Wicklung 42 vorgesehen.

In dem hier gezeigten Ausführungsbeispiel ist in dem Stator 3 nur eine Spule 4 vorgesehen, ohne aber die Erfindung hierauf beschränken zu wollen. Es ist gleichfalls möglich, mehrere Spulen 4 bezüglich der Drehachse 51 axial hintereinander jeweil koaxial zu der Drehachse 51 anzuordnen. Es ist somit möglich, beispielsweise in einem Art Baukastensystem mit wenigen Bauteilen eine größere Reihe unterschiedlicher Drehmagnete 1 bezüglich ihrer Kraftentfaltung zu realisieren beziehungsweise anzupassen.

Der Stator 3 ist dann entsprechend länger ausgestaltet.

Der mehrteilige Aufbau des Stators 3, aufgeteilt in ein Mantelteil 35 und ein Deckelteil 36 erleichtert erheblich die Montage des erfindungsgemäßen Drehmagneten 1. Bei einem abgenommenen Deckelteil 36 ist es möglich, die Spule 4 im Mantelteil 35 einzubauen, insbesondere auf dem Mittelpol 34 aufzustecken. Der Mittelpol 34 ist hülsenartig ausgebildet und innen hohl, um die Rotorwelle 50 aufzunehmen. In dem Mittelpol 34 ist auch ein Drehlager 55 eingeschoben und gegebenenfalls eingepresst, hierzu ist ein entsprechender Kragen im Mittelpol 34 vorgesehen. Des weiteren besitzt der Stator 3 ein im Bodenbereich 302 vorgesehenes Verschlußteil 303, das den Stator 3 auf der dem freien Ende der Rotorwelle 50 abgewandten Seite verschließt und durch welchen das rückseitige Drehlager 55 in den Mittelpol 34 einbaubar ist.

Das Deckelteil 36 wird in axialer Richtung (bezogen auf die Drehachse 51) auf das Mantelteil 35 aufgeschoben und mit diesem verpresst. In dem hier gezeigten Ausführungsbeispiel des erfindungsgemäßen Drehmagneten bildet das Deckelteil 36 die Polfläche 30 und kann in einer weiteren möglichen Ausführungsform auch die Polteilflächen 31, 32 aufnehmen beziehungsweise tragen.

Der Stator 3 dient zur Führung des Magnetfeldes, welches von der Spule 4 erzeugt wird, wenn die von der Spule 4 getragenen Wicklungen 42 mit elektrischem Strom beaufschlagt werden. Die Verbindung zwischen dem Mantelteil 35 und dem Deckelteil 36 ist so ausgestaltet, dass eine Leitung des magnetischen Flusses möglichst nicht behindert wird.

Das Deckelteil 36 hat auch die Aufgabe, eine Befestigungsmöglichkeit des erfindunsgemäßen Drehmagneten 1 zur Verfügung zu stellen. Hierzu ist ein bevorzugt beidseitig vorstehender Befestigungsflansch 38 am Deckelteil 36 ausgeformt, welcher Befestigungsöffnung 39 besitzt, durch welche entsprechende Befestigungsschrauben (nicht gezeigt) durchführbar sind.

Der Rotor 5 besitzt eine Rotorwelle 50, die ca. 1,5 bis 3 mal, bevorzugt ca. 1,8 bis 2,2 mal länger ist als die Länge des Stators 3. Mittig trägt die Rotorwelle 50 die Rotorscheibe 52. An diese schließt sich, in Fig. 1 links gezeigt, der Bereich der Rotorwelle 50 an, der in den Stator einsteht und in den beide Drehlager 55 gelagert sind. An dem statorseitigen Ende der Rotorwelle 50 ist eine Rückstellfeder 56 für den Rotor vorgesehen.

An dem nach außen, über den Stator 3 hervorstehenden Teil (in Fig. 1 rechts dargestellt) der Rotorwelle 50 sind entsprechend Elemente anschließbar, die aufgrund der Drehbewegung des Drehmagneten 1 zu steuern sind. Hierzu durchdringt die Rotorwelle 50 eine Abdeckscheibe 300, die die Rotorscheibe 52 verdeckt.

An der Abdeckscheibe 300 ist auch eine Drehwinkelbegrenzung 8 für den Rotor 5 vorgesehen. In dem hier gezeigten Ausführungsbeispiel ist die Drehwinkelbegrenzung 8 gebildet von zwei langlochartigen Ausnehmungen oder Öffnungen 301 in der Abdeckscheibe 300, die in Umfangsrichtung verlaufen. An der Rotorscheibe 52 sind in die Öffnungen 301 einstehende Prallkörper 80 vorgesehen, die zum Beispiel mit einem Elastomer bestückt sind oder aus einem Elastomer bestehen. Diese Prallkörper 80 begrenzen die Drehbewegung des Rotors 5.

In dem hier gezeigten Ausführungsbeispiel trägt die Rotorscheibe 52 einen Ring 53 von Permanentmagneten, deren Polanordnung aber so gewählt ist, dass sie in Umfangsrichtung, (bezogen auf die Rotation der Drehachse, um die Drehachse 51) abwechselnd, also alternierend ist.

In einer weiteren möglichen Ausführungsform der Erfindung (nicht dargestellt) kann die Rotorwelle 50 zwei Rotorscheiben 52 tragen, wobei die Spule 4 dann zwischen den beiden Rotorscheiben 52 vorgesehen ist. Mit dieser Ausführungsform wird das Konzept für die Magnetflussverteilung beidseitig an der Spule 4 realisiert. Das bedeutet, auch die Polfläche 30, die der zweiten Rotorscheibe 52 zugewandt ist, ist aus mindestens zwei der Magnetflussführung des von der durch Strombeaufschlagung der Wicklung der Spule 4 erfolgten Magnetfeldes dienenden Polteilflächen 31, 32 gebildet. Auch diese Polfläche 30 kann erfindungsgemäß alle Merkmale besitzen, wie dies für die erste Polfläche 30 beschrieben wurde. Die hieraus resultierende Magnetisierung ist ebenfalls bezüglich der Drehachse 51 in Umfangrichtung gesehen alternierend. Neben dieser Ausführungsform ist selbstverständlich auch eine kaskadenartige oder abwechselnde Anordnung von mehreren Spulen 4 und/oder mehreren Rotorscheiben 52 möglich und denkbar.

Im Übrigen sind alle im Zusammenhang mit der Fig. 1 beschriebenen Merkmale auf die übrigen möglichen Ausführungsformen, wie zuvor beschrieben, übertragbar und mit diesen Ausführungsformen kombinierbar.

In Fig. 2 ist die Ausgestaltung der Polfläche 30 gezeigt. Die Polfläche 30 ist in dem hier gezeigten Ausführungsbeispiel in zwei Polteilflächen 31, 32 aufgeteilt. Die Polteilfläche 30 ist dabei im Deckelteil 36 rechtwinklig zur Drehachse 51 angeordnet. Das Deckelteil 36 ist topfartig ausgestaltet und weist einen umlaufenden Begrenzungsrand 304 auf. Diese umlaufende Begrenzungsrand 304 ist kreisrund und koaxial zur Drehachse 51. Auch der Begrenzungsrand 304 bzw. ein Teil dieses Begrenzungsrands 304 zählt zu der Polteilfläche 31, die als erste Polteilfläche 31 außen angeordnet ist und die zweite, innere Polteilfläche 32 umgibt. Die Polfläche 30 bzw. die Polteilflächen 31 und 32 sind, genauso wie der Stator 3 im übrigen (Mantelteil 35 und Deckelteil 36), aus einem weichmagnetischen Material bestehend, um somit die Magnetfeldlinie optimal zu führen. Diese Elemente sind Teil des Magnetflußkonzeptes des Stators 3.

In Fig. 2 ist gut zu erkennen, dass die (äußere) erste Polteilfläche 31 als Ringsegment, von der Drehachse 51 beabstandet zu einer Mittelachse aber achssymmetrisch (spiegelbildlich) angeordnet ist.

Die in Fig. 2 gewählte Ausgestaltung unterscheidet zwei voneinander getrennte Polteilflächen 31, 32; die hier gezeigte Konstruktion ist aber auch mit Hilfe von drei Polteilflächen erklärbar. In diesem Ausführungsbeispiel sind die Polteilflächen 31a, 31b ringsegmentartig ausgebildet und besitzen einen Außendurchmesser, der etwas größer oder zumindest gleichgroß ist wie der Außendurchmesser der mittleren, zweiten Polteilfläche 32. Es ist klar, dass es für die Erfindung nicht darauf ankommt, ob die beiden Polteilflächen 31a, 31b nun durch den umlaufenden Begrenzungsrand 304 magnetisch leitend verbunden sind oder nicht.

Die Wirkung der Anordnung dieser Polteilflächen 31, 32 ist nun jene, dass die wohlbekannte punkt- oder rotationssymmetrische Feldlinienverteilung bei einer Magnetspule bei Ausgestaltung der einzelnen Polteilflächen 31, 32 verzerrt wird. Mit N bzw. S sind die Magnetpole der durch die Spule erzeugten Magnetfeldes angegeben. Dabei ist es günstig, dass zwischen der Polteilfläche 32, die auch die Drehachse 51 umschließt, und den seitlich beabstandeten Polteilflächen 31, 31a, 31b ein Polspalt 33 besteht. Alternativ ist der Polspalt 33 verfüllt oder unverfüllt. Für die Magnetfeldlinien stellt dieser Polspalt 33 einen entsprechenden Widerstand dar.

In Umfangsrichtung, bezogen auf die Drehachse 51 gesehen, bildet sich somit auf der Polfläche 30 eine abwechselnde Anordnung von Nord- (N) bzw. Südpolen (S) aus. Diese alternierende Magnetpolanordnung befindet sich innerhalb des umlaufenden Begrenzungsrandes 304, aber etwas beabstandet von der Drehachse 51.

Konstruktiv ist die Anordnung so gelöst, dass das Deckelteil 36 eine Ausnehmung 37 aufweist, in welche die innere, zweite Polteilfläche 32 einsetzbar ist. Genaugenommen wird dabei die innere, zweite Polteilfläche 32 auf das dornartige Ende des Mittelpoles 34 aufgesetzt, aufgedrückt oder aufgepresst. Neben einem guten mechanischen Sitz erfährt somit die Polteilfläche 32 auch einen guten magnetischen Kontakt zu dem übrigen Mittelpol 34.

Die Anordnung ist dabei so gewählt, dass die der Rotorscheibe 52 zugewandte Oberfläche der Polteilfläche 31, 32 zueinander koaxial sind, also der Abstand von der in mehrere Polteilflächen 31, 32 aufgeteilten Polfläche 30 zur Rotorscheibe 52 überall gleichgroß ist, weswegen sich ein Luftspalt 54 zwischen der Polfläche 30 und der Rotorscheibe 52 bzw. dem auf der Rotorscheibe 52 angeordneten Ring 53 von Permanentmagneten gleicher Ausdehnung ergibt.

Wie in Fig. 2 gut zu sehen, erstreckt sich der Polspalt 33 in radialer Richtung (bezogen auf die Drehachse 51). Der Polspalt 33 befindet sich dabei, in Umfangsrichtung gesehen, zwischen der ersten Polteilfläche 31 und der zweiten Polteilfläche 32. Somit erstreckt sich der Polspalt 33, in radialer Richtung bezogen, auf die Drehachse 51, wohingegen die Breite b des Polspaltes auf der Erstreckung des Polspaltes 33 rechtwinklig steht.

Zwischen dem Ende der zweiten Polteilfläche 32 und dem Begrenzungsrand 304 erstreckt sich ebenfalls, in Umfangsrichtung gesehen, ein Polspalt 33, 33a, dessen Breite radial orientiert ist.

Die Ausgestaltung der zweiten, inneren Polteilfläche 32, ist drehankerähnlich in Draufsicht gesehen, auch rechteckartig, wobei die Polteilfläche 32 in drei Bereichen zu unterscheiden ist. In einem mittleren Bereich, der eine Öffnung für das Durchführen der Rotorwelle 50 aufweist, wird die Polteilfläche 32 von einem zur Drehachse konzentrischen Kreisbogensegment beschränkt. Die Länge des Kreisbogensegmentes ist dabei der Länge der daran anstehenden, weiter außen liegenden ersten Polteilfläche 31 angepasst. Sie beträgt ca. 105° und liegt bevorzugt in einem Intervall von 60° bis 130°.

Die beiden einander gegenüberliegenden, äußeren Bereiche, die an den Mittelbereich anschließen, sind zueinander symmetrisch und somit gleich; sie sind charakterisiert durch eine radial zur Drehachse 51 verlaufenden Begrenzungskante, um dann in einem Begrenzungsbogen mit größerem Durchmesser zu enden.

Die Anordnung ist so gewählt, dass der Luftspalt 54, der zwischen dem Ring 53 von Permanentmagneten (die auf der Rotorscheibe 52 angeordnet sind) geringer ist als der Polspalt 33 zwischen den einzelen Polteilflächen 31, 32. Die an der inneren, zweiten Polteilfläche 32 austretenden Magnetfeldlinien haben somit eine geringere Distanz zu dem Ring 53 von Permanentmagneten zu überwinden als zu der benachbarten anderen Polteilfläche 31.

Die Rotorscheibe 52 besitzt auf ihrer der Spule 4 zugewandten Seite den Ring 53 von Permanentmagneten, die in ihrer Polarisierung alternierend angeordnet sind derart, dass an ihrer der Polfläche 30 zugewandten Oberfläche zum Beispiel die Polfolge N-S-N-S usw. besteht.

Auf der dem Ring 53 abgewandten Seite der Rotorscheibe ist die Drehwinkelbegrenzung 8 vorgesehen; hierzu trägt die Rotorscheibe 52 Prallkörper 80.

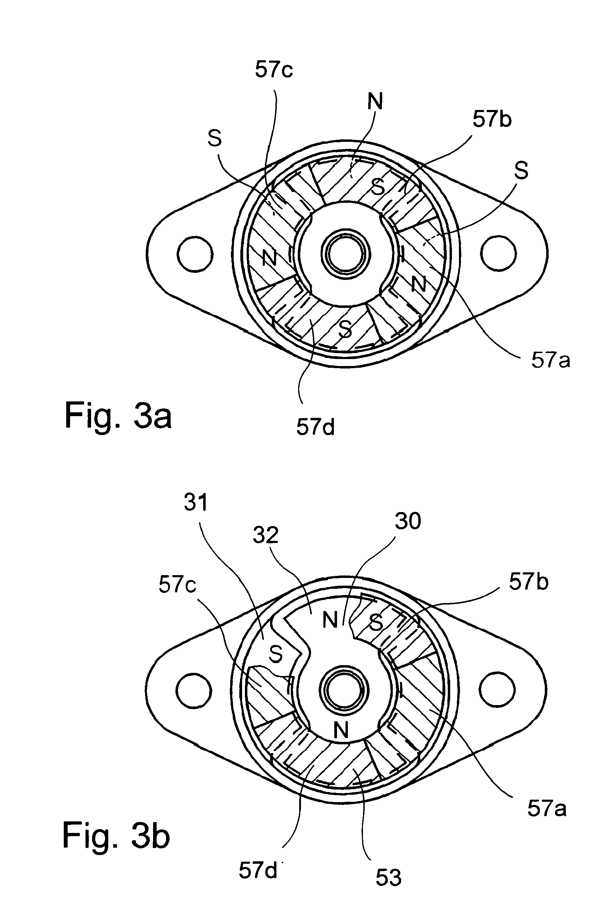

Das Funktionsprinzip wird insbesondere durch die Fig. 3a und 3b beispielhaft beschrieben. Die in Fig. 3a, 3b gewählte Darstellung entspricht der in Fig. 2, wobei auf der Ebene der Polfläche 30 hier noch der Ring 53 von Permanentmagneten 57a, 57b, 57c, 57d gezeigt ist.

Durch die Ausgestaltung der Polfläche 30, in Umfangsrichtung in vier verschiedene Pole, ergibt sich eine ca. 90°-Einteilung der Segmente, die auch in der Anordnung der Permanentmagneten 57a, 57b, 57c und 57 d in dem Ring 53 realisiert ist.

Zur etwas einfachereren Orientierung ist in Fig. 3b ein Teil des Ringes 53 aufgebrochen, um die darunterliegende Polfläche 30 beziehungsweise Polteilflächen 31 und 32 zu zeigen. Auf diese Polteilflächen sind ihre Magnetpole N und S angeordnet, deutlich ist auch zu erkennen, dass der einzelne Permanentmagnet 57b ebenfalls mit einem S markiert ist. Es ergibt sich also eine Anordnung eines Südpoles des Permanentmagneten 57b über den Nordpol der darunterliegenden Polteilfläche 31. Es ist klar, dass die Magnetisierung des Permanentmagneten 57a, b, c, d auf der der Polfläche 30 zugewandten Seite angegeben ist. Fig. 3a zeigt die gleiche Situation wie die Fig. 3b, allerdings ist aufgrund des übereinanderliegenden Aufbaus die Orientierung etwas schwieriger. Die Polangaben der unter dem Ring 53 liegenden Polteilflächen 31, 32 wurden durch eine gestrichelte Linie angedeutet. Es ist klar, dass die Polarität im Bereich der Polfläche 30 beziehungsweise der ersten und zweiten Polteilflächen 31, 32 erst bei entsprechender Strombeaufschlagung der Spule 4 entsteht. Die Drehbewegung wird durch eine Anziehung beziehungsweise Abstoßung der Permanentmagnetsegmente 57a, b, c, d erzeugt. Durch die Poltrennung an den Polspalten 33 tritt dieser Effekt in allen vier Segmente auf, die Länge der einzelnen Permanentmagnetsegmente entspricht denen im Bereich der Polfläche. Es resultiert eine Drehbewegung des Permanentmagnetringes 53 entgegen den Uhrzeigersinn.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Drehmagnet, bestehend aus einem Stator (3) und einem um eine Drehachse (51) drehbaren Rotor (5), wobei der Rotor (5) eine Rotorwelle (50) aufweist, auf welcher eine Rotorscheibe (52) angeordnet ist, und die Rotorscheibe (52) in Umfangsrichtung gesehen alternierend, magnetisch polarisiert ist, und der Stator (3) mindestens eine Wicklungen (42) von elektrisch Strom leitenden Draht tragende Spule (4) aufnimmt, und die Wicklungen (42) die Drehachse (51) umschließen und zwischen der Spule (4) und der Rotorscheibe (52) eine bevorzugt rechtwinklig zur Drehachse (51) angeordnete Polfläche (30) vorgesehen ist, die zumindest aus zwei der Magnetflussführung des von der durch Strombeaufschlagung der Wicklung (42) der Spule (4) erzeugten Magnetfeldes dienenden Polteilflächen (31, 32) besteht, wodurch an der Polfläche (30) eine, bezogen auf die Drehachse (51) in Umfangsrichtung gesehene, alternierende, magnetische Polarisierung besteht.

2. Drehmagnet nach Anspruch 1, **gekennzeichnet durch** einen Polspalt (33) zwischen den Polteilflächen (31, 32), wobei sich der Polspalt (33) bevorzugt in radialer Richtung bezogen auf die Drehachse (51) erstreckt und/oder der Polspalt (33) mit einem magnetsich wenig wirksamen oder unwirksamen Material verfüllt oder als Polluftspalt ausgebildet ist.

3. Drehmagnet nach Anspruch 1 oder 2, **dadurch gekennzeichnet, dass** eine erste äußere Polteilfläche (31) eine zweite, innere Polteilfläche (32) zumindest teilweise umschließt und/oder zumindest eine Polteilfläche (31, 32) achssymmetrisch ist und/oder die Polteilflächen (31, 32) koplanar sind, insbesondere wobei die zweite, innere Polteilfläche (32), in Draufsicht gesehen, längserstreckend, rechteckartig ausgebildet ist und/oder den verschiedenen Polteilflächen (31, 32) unterschiedliche Magnetpole zugeordnet sind.

4. Drehmagnet nach einem oder mehreren der vorhergehenden Ansprüche, **dadurch gekennzeichnet, dass** der Stator (3) einen, die Spule (4) durchdringenden und die zweite, innere Polteilfläche (32) tragenden, insbesondere dornartigen Mittelpol (34) aufweist und/oder der Stator (3) die Spule (4) umgibt beziehungsweise umschließt und als Gehäuse dient und/oder der Stator (3) der Magnetflussführung des von der durch Strombeaufschlagung der Wicklung (42) der Spule (4) erzeugten Magnetfeldes dient und bevorzugt aus weichmagnetischem Eisen gefertigt ist, insbesondere wobei der Stator (3) mehrteilig ausgebildet ist und zumindest ein Mantelteil (35) die Spule (4) aufnimmt und ein Deckelteil (36) am Mantelteil (35) anschließt und dieses verschließt und/oder der Stator (3) eine Polteilfläche (31) bildet, wobei die Polteilfläche (31) insbesondere in oder am Deckelteil (36) angeordnet ist.

5. Drehmagnet nach einem oder mehreren der vorhergehenden Ansprüche, **dadurch gekennzeichnet, dass** der Stator (3), insbesondere das Deckelteil (36) im Bereich der ersten Polteilfläche (31) eine Ausnehmung (37) zur Aufnahme der zweiten Polteilfläche (32) aufweist, deren Kontur der Kontur der zweiten Polteilfläche (32) entspricht, wobei sich zwischen beiden Polteilflächen (31, 32) zumindest teilweise ein Polspalt (33) erstreckt und/oder am Deckelteil (36) mindestens eine Befestigungsöffnung (39) vorgesehen ist.

6. Drehmagnet nach einem oder mehreren der vorhergehenden Ansprüche, **dadurch gekennzeichnet, dass** die Rotorscheibe (52) auf ihrer der Spule (4) zugewandten Seite zumindest einen Ring (53) von Permanentmagneten (57a, 57b, 57c, 57d) trägt.

7. Drehmagnet nach einem oder mehreren der vorhergehenden Ansprüche, **dadurch gekennzeichnet, dass** die Länge der (inneren) zweiten Polteilfläche (32) im wesentlichen dem Radius des Ringes (53) von Permanentmagneten (57a, 57b, 57c, 57d) entspricht.

8. Drehmagnet nach einem oder mehreren der vorhergehenden Ansprüche, **dadurch gekennzeichnet, dass** eine parallele Anordnung der Polfläche (30) zu der Rotorscheibe (52) beziehungsweise dem Ring (53) von Permanentmagneten (57a, 57b, 57c, 57d).

9. Drehmagnet nach einem oder mehreren der vorhergehenden Ansprüche, **dadurch gekennzeichnet, dass** der Luftspalt (54) in axialer Richtung bezogen auf die Drehachse (51) zwischen der Polfläche (30) und der Rotorscheibe (52) beziehungsweise dem Ring (53) von Permanentmagneten (57a, 57b, 57c, 57d) geringer ist als der Polspalt (33), wobei insbesondere die Summe der Breite des Luftspaltes (54) in axailer Richtung bezogen auf die Drehachse (51) zwischen der Polfläche (30) und der Rotorscheibe (52) und der Dicke des Ringes (53) von Permanentmagneten (57a, 57b, 57c, 57d) geringer ist als die Breite b des Polspaltes (33).

10. Drehmagnet nach einem oder mehreren der vorhergehenden Ansprüche, **gekennzeichnet durch** eine einseitige Ausgestaltung der Rotorscheibe (52).

11. Drehmagnet nach einem oder mehreren der vorhergehenden Ansprüche, **dadurch gekennzeichnet, dass** die Rotorwelle (50), mindestens zwei Rotorscheiben (52) trägt, und die Spule (4) zwischen den beiden Rotorscheiben (52) vorgesehen ist und/oder eine Drehwinkelbegrenzung (8) des Rotors (5) insbesondere der Rotorscheibe (52) vorgesehen ist.

12. Drehmagnet nach einem oder mehreren der vorhergehenden Ansprüche, **dadurch gekennzeichnet, dass** zumindest eine Polteilfläche (31, 32) von dem Spulenkörper (41) der Spule (4) gehalten ist und/oder sich auf der der Spule (4) abgewandten Seite an der Rotorscheibe (52) ein insbesondere magnetisch gering wirksame oder magnetisch unwirksame Abdeckscheibe (300), insbesondere unmittelbar, anschließt.

13. Drehmagnet nach einem oder mehreren der vorhergehenden Ansprüche, **gekennzeichnet durch** mindestens ein Drehlager (55) des Rotors (5) im Stator (3).

14. Drehmagnet nach einem oder mehreren der vorhergehenden Ansprüche, **gekennzeichnet durch** mehrere, hintereinander angeordnete, Wicklungen (42) tragende Spulen (4) im Stator (3) und/oder eine bezüglich der Drehachse (51) koaxiale Anordnung der Spule/n (4).

15. Drehmagnet nach einem oder mehreren der vorhergehenden Ansprüche, **gekennzeichnet durch** eine zylinderförmige Ausgestaltung oder eine elliptische Grundfläche der Spule/n (4).
